# FASCICULE DE BREVET EUROPEEN

(11) **EP 1 381 978 B1**
(45) Date de publication et mention de la délivrance du brevet: **01.06.2005**
(21) Numéro de dépôt: 02757735.2
(22) Date de dépôt: 26.03.2002
(51) Int. Cl.: G06F 17/30, H04L 29/06

(54) **DISPOSITIF ET PROCEDE D'ECHANGE DE FLUX ENTRE UN DISPOSITIF CLIENT ET UN SERVEUR**
EINRICHTUNG UND VERFAHREN ZUM DATENFLUSSAUSTAUSCH ZWISCHEN EINER CLIENT-EINRICHTUNG UND EINEM SERVER
DEVICE AND METHOD FOR DATA FLOW EXCHANGE BETWEEN A CLIENT DEVICE AND A SERVER

(30) Priorité: 30.03.2001 FR 0104398
(43) Date de publication de la demande: 21.01.2004
(73) Titulaire: France Telecom S.A., 75015 Paris (FR)
(72) Inventeur: BES, Cyril, F-14790 Verson (FR); LOVRIC, Ivan, F-34400 Lunel (FR); MASCHIO-ESPOSITO, Eric, F-14790 Fontaine Etoupefour (FR)
(74) Mandataire: Bentz, Jean-Paul
(86) Numéro de dépôt international: PCT/FR2002/001044
(87) Numéro de publication internationale: WO 2002/080024

(56) Documents cités:
- WO-A-98/43177

## Description

L'invention concerne un dispositif et un procédé d'échange de flux entre un dispositif client disposant d'un fichier Internet et un serveur apte à assurer à la demande du dispositif client un service de transformation dudit fichier, la communication entre le dispositif client et le serveur étant basée sur un protocole d'adaptation de contenu de fichiers Internet de type iCAP.

Le domaine de l'invention est celui de la communication entre des équipements d'un réseau de télécommunication de type Internet et des serveurs hébergeant des services à valeur ajoutée en l'occurrence, les services de transformation ou d'adaptation de contenu.

Dans la pratique, un contenu se présente sous la forme d'un fichier.

La communication est basée sur un protocole d'adaptation de contenu de type iCAP, acronyme anglais de « Internet Content Adaptation Protocol », défini par un groupe de sociétés dans le cadre de l'iCAP forum.

Dans l'état de la technique, on peut citer la demande de brevet internationale WO 98/43177, qui décrit un dispositif et un procédé d'échange de flux entre un dispositif client disposant d'un fichier Internet et un serveur apte à assurer à la demande du dispositif client, au moins un service de transformation dudit fichier. Ce service de transformation change le contenu des fichiers reçus du réseau Internet avant de les retourner vers le client.

On peut citer comme exemples de services de transformation de contenu, des services de transformation de fichiers tels que la conversion de documents Word en documents RTF, la recherche de virus dans un fichier, la traduction automatique d'un fichier, la catégorisation de contenus par analyse sémantique renvoyant un fichier correspondant aux thèmes principaux du document, en vue par exemple d'un contrôle parental lorsque des thèmes licencieux ont été détectés, etc.

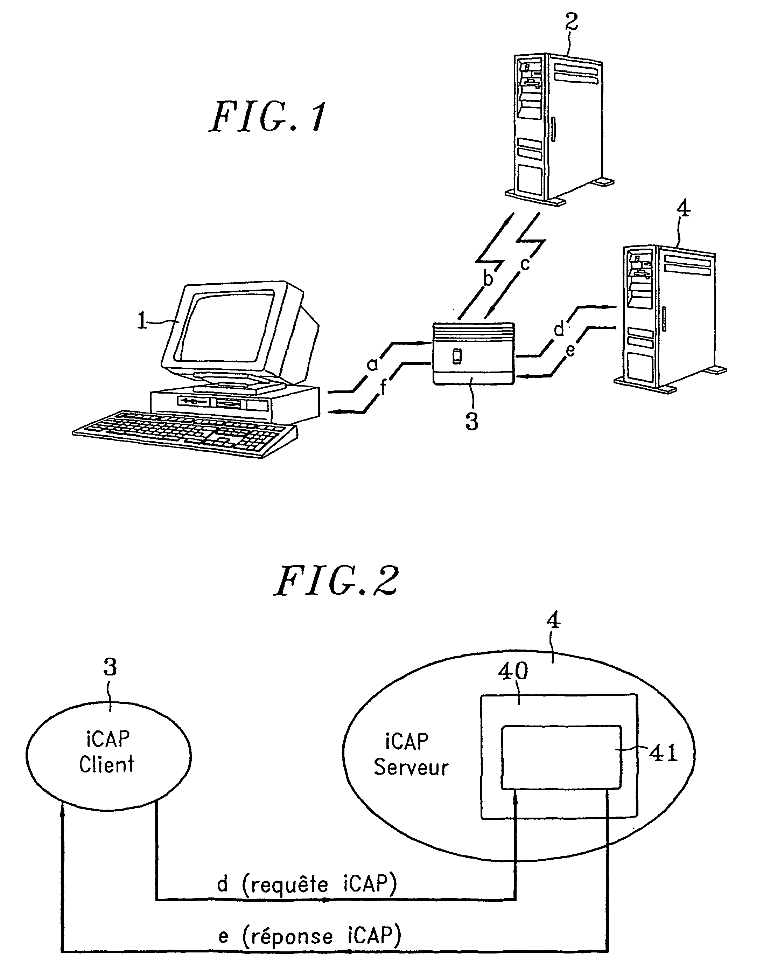

Un exemple de transformation de contenu selon le protocole iCAP est illustré sur la figure 1 :
a) une requête HTTP est envoyée de l'ordinateur 1 d'un utilisateur vers un proxy cache 3 configuré dans le navigateur (« browser » en anglais) de l'ordinateur ; l'ordinateur 1 peut être remplacé par tout autre équipement apte à envoyer une requête HTTP, de même le cache 3 peut être remplacé par un routeur ou par tout autre équipement du réseau Internet,
b) le cache 3 envoie une requête HTTP au serveur Web 2 contenant cette page,
c) le serveur Web renvoie la page demandée au cache 3,
d) le cache 3 agissant comme dispositif client iCAP, plus simplement appelé client iCAP, demande un service de transformation de contenu au serveur iCAP 4, en lui transmettant la page Web ; la transformation de contenu demandée pourrait tout aussi bien concerner la requête HTTP elle-même et être demandée directement, à l'issue de l'étape a) ou à l'issue de l'étape c), c'est-à-dire après que la réponse HTTP ait été envoyée ; dans la suite, on désignera par fichier Internet, une réponse HTTP comportant une ou plusieurs entêtes et un contenu, ou une requête HTTP ne comportant en général pas de contenu mais au moins une entête ;
e) le serveur iCAP 4 traite cette demande en mettant en oeuvre le service de transformation de fichier demandé puis répond au cache 3 en renvoyant le fichier transformé, par exemple la page traitée,
f) le cache 3 retourne à l'ordinateur 1 de l'utilisateur la réponse du serveur iCAP 4 et stocke cette réponse.

Comme illustré dans cet exemple, le rôle du protocole iCAP consiste à relier un client iCAP 3 au serveur iCAP 4.

Actuellement pour pouvoir implémenter ce protocole iCAP entre un client 3 et un serveur 4 correspondant aux étapes d) et e) précédentes, il est indispensable comme représenté figure 2, de développer une couche spécifique 41 au sein du service de transformation de fichier 40 mis en oeuvre par le serveur iCAP 4. Cela impose en particulier un développement spécifique pour chaque service de transformation de fichier. De plus, ces développements sont lourds et coûteux.

Le but de la présente invention est donc de réduire voire de supprimer le développement spécifique nécessaire à chaque service pour qu'il soit compatible avec le protocole iCAP.

L'invention a pour objet un dispositif d'échange de flux entre un client disposant d'un fichier Internet et un serveur apte à assurer à la demande du client, au moins un service de transformation dudit fichier, la communication entre le client et le serveur étant basée sur un protocole d'adaptation de contenu de fichiers Internet de type iCAP, principalement caractérisé en ce qu'il comporte un adaptateur des flux de type iCAP en fichiers aptes à être utilisés directement par ledit serveur ou ledit client ; et en ce que l'adaptateur comprend des moyens de communication avec le client et le serveur et un fichier de configuration dans lequel est(sont) déclaré(s) le(s) service(s) de transformation.

L'adaptateur comporte avantageusement un module de communication apte à gérer la communication avec le client et/ou un module d'extraction des entêtes et du contenu du fichier Internet et/ou un module de pré-analyse des entêtes et/ou un module de création de fichiers d'interface entre l'adaptateur et le serveur et/ou un module d'appel du service d'adaptation du serveur et/ou un module de réponse et/ou un module de contrôle d'intégrité du fichier transformé destiné au client et/ou un module de reconstitution du fichier transformé destiné au client.

L'adaptateur peut être intégré au serveur.

L'invention concerne également un procédé d'échange de flux entre un client disposant d'un fichier Internet, et un serveur apte à assurer au moins un service de transformation de fichier, la communication entre le client et le serveur étant basée sur un protocole d'adaptation de contenu de fichiers Internet de type iCAP, caractérisé en ce qu'il consiste à placer un adaptateur des flux de type iCAP en fichiers aptes à être utilisés entre le client et le serveur et en ce qu'il comporte les étapes suivantes :
a- l'envoi d'un fichier Internet, par ledit client à l'adaptateur,
b- l'adaptation du fichier Internet par l'adaptateur et envoi du fichier adapté audit serveur,
c- l'exécution de la transformation du fichier adapté, par ledit serveur et envoi du fichier transformé audit adaptateur,
d- l'adaptation du fichier transformé par l'adaptateur
e- l'envoi du fichier transformé et adapté audit client.

Selon une caractéristique de l'invention, l'étape b- consiste pour l'adaptateur à
- extraire les entêtes et éventuellement le contenu du fichier Internet fourni par le client,
- procéder à une pré-analyse des entêtes,
- générer des fichiers d'interface,
- appeler le service de transformation du serveur,
- se mettre en attente d'une réponse du serveur.

L'étape d- consiste avantageusement pour l'adaptateur à
- vérifier le paramètre de retour de l'appel et contrôler l'intégrité du fichier transformé,
- lorsque le contrôle d'intégrité le commande, reconstitution du fichier transformé.

Selon une caractéristique additionnelle, le procédé selon l'invention comporte une étape préalable d'initialisation de l'adaptateur consistant à déclarer dans un fichier de configuration de l'adaptateur, le ou les services de transformation.

D'autres particularités et avantages de l'invention apparaîtront clairement à la lecture de la description faite à titre d'exemple non limitatif et en regard des dessins annexés sur lesquels :
la figure 1 déjà décrite représente schématiquement les étapes d'appel à un système de transformation de fichier,
la figure 2 déjà décrite représente schématiquement le fonctionnement d'un système actuel de transformation de fichier,
la figure 3 représente schématiquement un système de transformation de fichier selon l'invention,
la figure 4 représente schématiquement les principaux éléments fonctionnels d'un dispositif d'échanges de flux iCAP selon l'invention,
la figure 5 représente schématiquement un exemple de fichier Internet,
les figures 6a), 6b) et 6c) représentent schématiquement des éléments fonctionnels d'un dispositif selon l'invention respectivement lors d'un appel de service de transformation, de l'exécution de ce service et de la réponse,
la figure7 est un diagramme de relations entre classes.

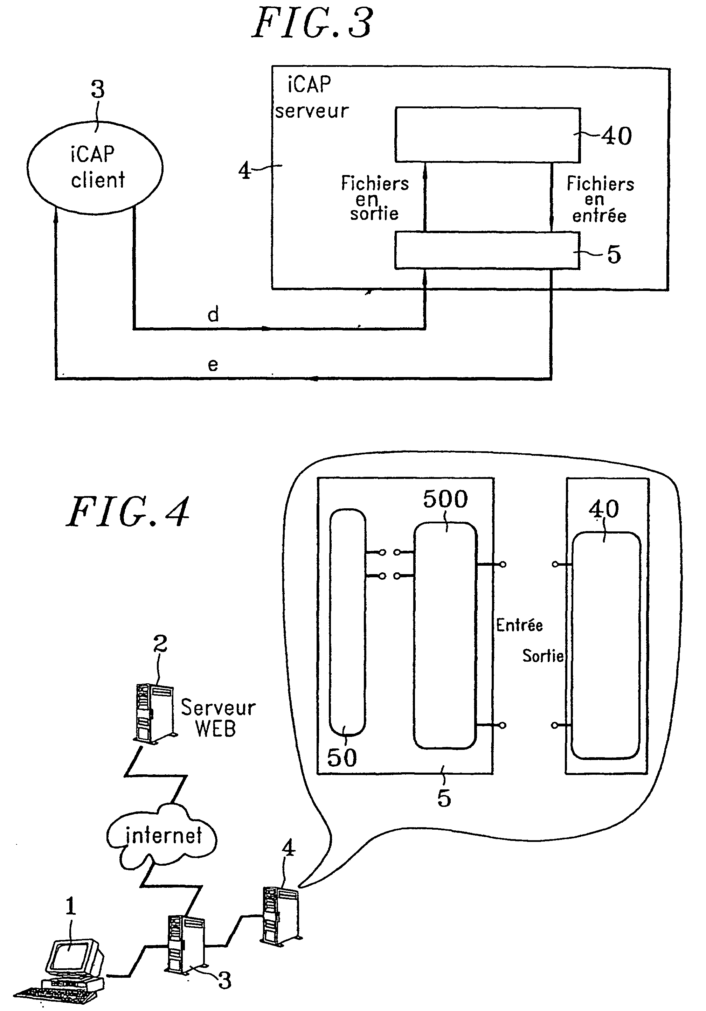

Comme représenté figure 3, l'invention consiste à prévoir un adaptateur 5 de préférence dans le serveur 4, pour d'une part dans le sens client-serveur, adapter les fichiers pour qu'ils puissent être directement utilisés par les services de transformation de fichier 40 et d'autre part dans le sens serveur-client, assurer un contrôle d'intégrité du fichier transformé et éventuellement sa reconstitution.

L'adaptateur 5 permet de formaliser les échanges entre le client iCAP 3 et les services de transformation de fichier grâce à une adaptation des flux iCAP des étapes d) et e) pour les rendre compatibles avec des services de transformation de fichiers 40 sans qu'il soit nécessaire de développer une couche iCAP au niveau des services de transformation de fichier. Ceci permet alors de définir des services de transformation de fichiers, modulaires, évolutifs et indépendants des couches iCAP.

On va à présent décrire le fonctionnement de l'adaptateur selon l'invention, en relation avec la figure 4 :
- l'adaptateur 5 est tout d'abord initialisé afin notamment de connaître (le ou) les services de transformation qui pourront être invoqués : dans un fichier de configuration sont entrés en plus des paramètres de fonctionnement (port de communication, taille de la file d'attente des demandes de services de transformation, répertoire où sont générés des fichiers d'interface avec le serveur, ...), les noms des services de transformation et les paramètres spécifiques associés aux services de transformation et la manière de les invoquer (chemin d'accès, modèle de compilation du service (utilisant des librairies statiques ou dynamiques ou des exécutables), ...); dans un exemple de réalisation, les paramètres de fonctionnement ont été initialisés par les champs et les valeurs suivants : le port de communication, server.default_port=8080 la taille de la file d'attente, server.default_backlog=20 le répertoire, server.temp_directory= /home/cbe/files le chemin d'accès à des fichiers spécifiques d'un service de filtrage, SVC.def_directory= /home/filtrage/SVC/def
- étant initialisé, l'adaptateur 5 est en attente de connexion provenant du client iCAP 3 via un module de communication 50 lui permettant ainsi de converser avec le client iCAP 3 et de stocker temporairement l'ensemble des données échangées pendant les phases de communication.

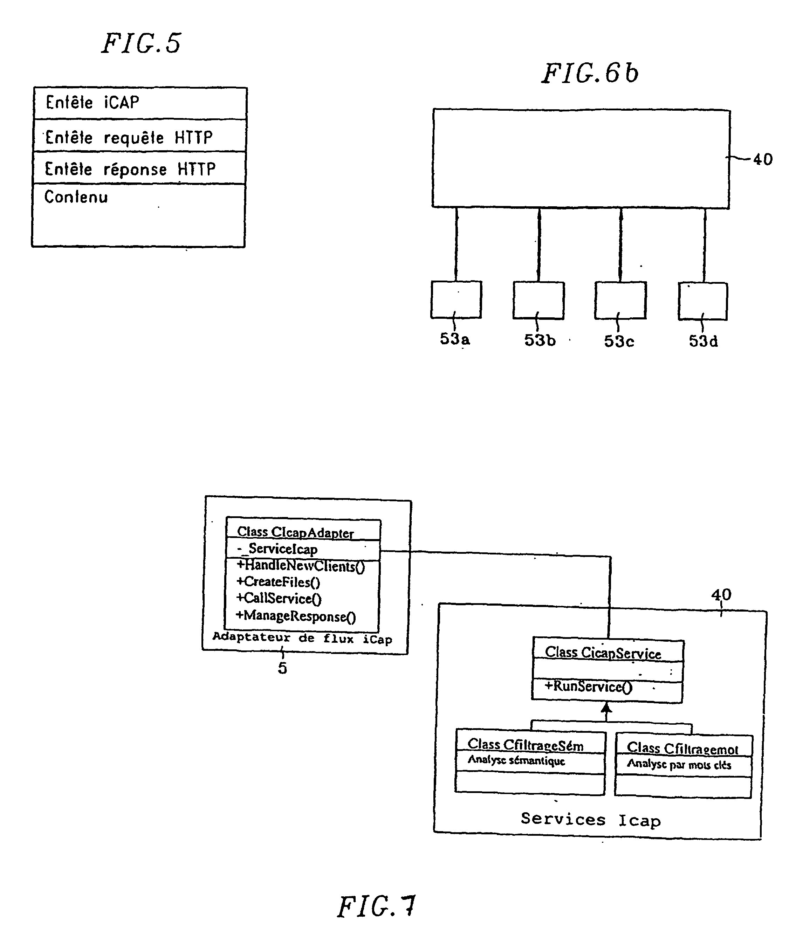

Lorsque la transformation de fichier concerne une réponse du serveur Web 2, ces données représentées figure 5, comportent outre un contenu, les entêtes HTTP émises depuis le navigateur Web de l'ordinateur 1, les entêtes HTTP retournées par le serveur Web 2 de destination, ainsi que les entêtes iCAP concernant le client iCAP 3. Lorsque la transformation de fichier concerne une requête, ces données comportent les entêtes HTTP émises depuis le navigateur Web de l'ordinateur 1, ainsi que les entêtes iCAP concernant le client iCAP 3 ; les autres données existent éventuellement dans le cas où la transformation est demandée après l'étape c) représentée figure 1, mais ne sont pas concernées puisqu'il s'agit d'une transformation de requête.

On se reporte à la figure 4. Le module 50 gère de manière classique la liaison TCP/IP et le protocole iCAP en ouvrant notamment un port de communication TCP ; ce module 50 est en attente tant qu'aucune requête iCAP ne lui parvient. Lors de la réception d'une requête iCAP, le module crée un nouveau canal (« socket ») de communication chargé d'assurer le traitement du service de transformation demandé par le client 3 ; le port de communication ainsi libéré se remet en attente d'une autre requête.

On peut par exemple utiliser l'instruction suivante écrite en langage C++ sous le système d'exploitation LINUX :
TheIcapAdapter>handleNewClients();

Les données émises par le client 3 sont transmises vers un module 500 via le canal de communication créé. Le module de communication 50 comporte en outre des moyens de stockage temporaire de l'ensemble des données échangées pendant les phases de communication.
- au moyen du module 500, l'adaptateur 5 extrait les entêtes et le contenu des données reçues du module 50, analyse les entêtes, crée quatre fichiers isolant les différentes entêtes du contenu, en utilisant par exemple l'instruction
   int iCr=CreateFiles(new_fd,cCanal,Exceed);
   après une mise en forme précise, l'adaptateur 5 redirige ensuite le flux de données vers le service de transformation 40 demandé en utilisant par exemple l'instruction
   if(_ServiceIcap).returnValue=_ServiceIcap
   ->CallService(new_fd,cCanal,_icapRootDirectory,Exceed);
   le service demandé 40 peut être localisé sur le serveur 4 ou être distant et invoqué à travers le réseau Internet par exemple. Le module 500 se met ensuite en attente d'une réponse du service de transformation ;
- le fichier transformé retourné par le service 40 est contrôlé par le module 500 qui en vérifie l'intégrité ; le fichier transformé subira éventuellement une mise en forme, voire même un ensemble d'actions supplémentaires pour le rendre conforme au protocole iCAP ;
- le fichier contrôlé est délivré au client iCAP 3 via le module de communication 50 et le canal de communication ouvert pour traiter ce service de transformation est fermé, en utilisant par exemple l'instruction
   CicapGlobals::ManageResponse(Filtrage,Long_file, rootDirectory,socket_fd);.

Le diagramme représenté figure 7, illustre les relations existant entre les classes utilisées dans les instructions précédentes.

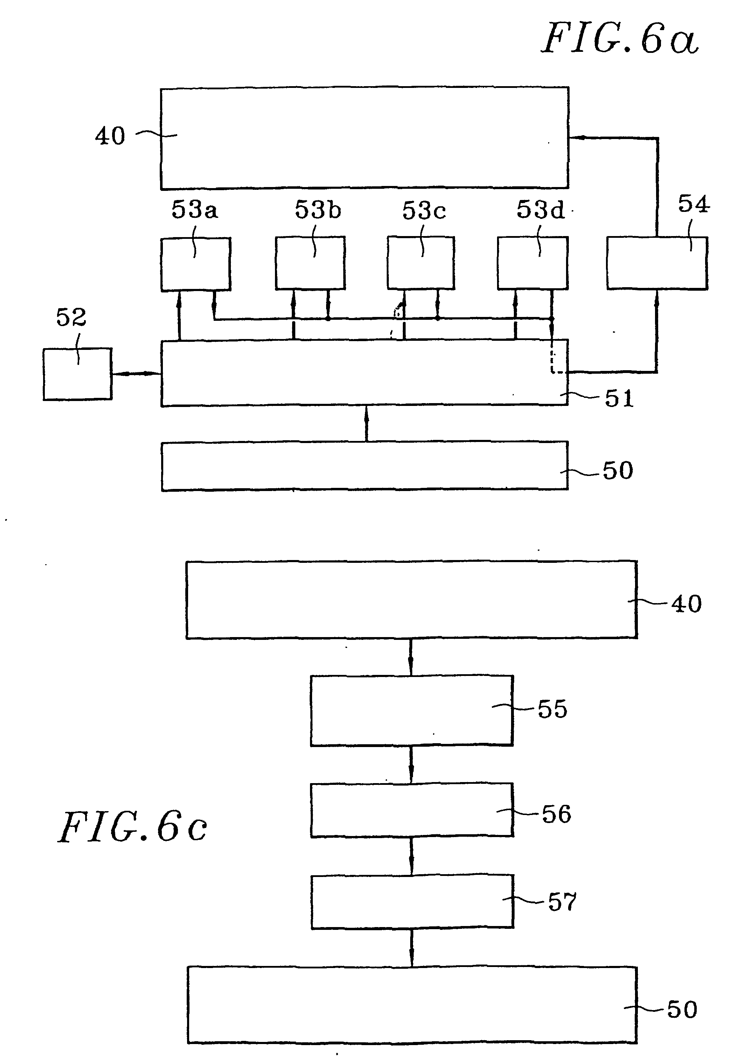

On va à présent décrire plus en détail les fonctionnalités du module 500 en relation avec les figures 6a), 6b) et 6c) correspondant respectivement à un appel de service de transformation, à l'exécution de la transformation et à la réponse.

Lors d'un appel de service de transformation, les données sont transmises par le module de communication 50 vers un module 51 d'extraction des entêtes et du contenu. Ce module 51 sépare les différents champs propres à chacune des entêtes et invoque pour chaque entête, le module 52 de pré-analyse des entêtes.

Le module 52 de pré-analyse des entêtes vérifie dans un premier temps que le service de transformation invoqué est disponible sur le serveur iCAP ; en l'occurrence, il vérifie que le service de transformation invoqué est décrit dans le fichier de configuration de l'adaptateur. Si ce n'est pas le cas, il retourne une erreur au client iCAP 3, via le module de communication 50, sans passer par le serveur iCAP. Le module 52 analyse également le type de requête iCAP : modification de réponse Web ou modification de requête Web. Dans le mode modification de requête, il n'est en général pas nécessaire d'extraire le contenu ni même l'entête HTTP du serveur Web. Le module 52 identifie les éventuels paramètres associés à l'exécution du service. Le module 52 retourne les résultats au module d'extraction 51 qui appelle les modules 53a, 53b, 53c, 53d de création des fichiers d'interface en sortie.

Les modules 53a, 53b, 53c, 53d créent les quatre fichiers offrant aux services de transformation de fichier 40, une interface commune facilitant les transformations à effectuer sur les fichiers :
- l'entête du serveur iCAP 4 est enregistrée dans un fichier iCAP-Out qui contient alors les informations relatives au client iCAP 3 ainsi que certains champs de la requête ou de la réponse HTTP selon qu'il s'agit du mode modification de requête ou modification de réponse,
- l'entête HTTP émise par l'ordinateur 1 qui contient des informations relatives au navigateur client ainsi qu'au serveur Web invoqué, est enregistrée dans un fichier HTTPClient-Out,
- l'entête HTTP retournée par le serveur Web 2 qui contient des informations relatives au contenu de la réponse, son adresse URL, son type, sa longueur est enregistrée dans un fichier HTTPServ-Out ; ce fichier peut être vide lorsqu'il s'agit du mode modification de requête ;
- le contenu de la réponse du serveur Web, expurgée des entêtes (fichier html, gif, jpeg, _) est enregistré dans un fichier F-Content-Out ; ce fichier peut être vide lorsqu'il s'agit du mode modification de requête.

Chaque nom de fichier est complété par un numéro d'index incrémenté d'une unité à chaque nouvelle requête iCAP.

Chaque module 53a, 53b, 53c et 53d de création de fichier envoie un code de retour au module 51 d'extraction pour indiquer le résultat de l'opération, ainsi que les noms des fichiers.

Une fois les entêtes analysées et les fichiers créés, le module d'extraction 51 invoque le module 54 d'appel des services de transformation 40. Ce module 54 appelle le service de transformation concerné en fournissant un ensemble de paramètres comportant notamment le nom de la fonction d'appel du service, l'adresse et le port du serveur iCAP où se situe le service et les noms des fichiers d'interface précédemment définis.

Comme indiqué figure 6b), le service de transformation 40 exécute alors la transformation en relation avec les modules 53a, 53b, 53c et 53d permettant d'accéder aux fichiers d'interface, et retourne les données transformées à un module de réponse 55.

Le module de réponse 55 représenté figure 6c), récupère les données du service de transformation 40.

Parmi ces données figure un code de retour de la fonction d'appel du service indiquant que la transformation a été correctement effectuée ; lorsque ce n'est pas le cas et qu'un problème a été détecté, le code de retour qui est alors un code d'erreur étendu permet au module de réponse 55 un diagnostic rapide du problème détecté.

Parmi ces données figurent également des informations supplémentaires sous forme de quatre fichiers d'interface en entrée correspondant aux fichiers d'interface en sortie. Chacun de ces fichiers reflète la transformation de fichier intervenue ; il en résulte :
un complément de modification de l'entête iCAP,
d'éventuelles modifications de l'entête HTTP client,
d'éventuelles modifications de l'entête HTTP serveur,
les données résultant du fichier transformé.

Le module de réponse 55 peut utiliser ces fichiers pour appeler un nouveau service iCAP et ainsi enchaîner les services de transformation dans la mesure où les données et paramètres sont disponibles et déjà répertoriés. Cette fonctionnalité peut être activée lorsque les services à enchaîner ont le même nom générique.

Un service de contrôle de virus peut par exemple succéder à un service de contrôle « parental » interdisant l'accès à des pages Web pour lesquelles des sujets licencieux ont été détectés, ces deux services étant reconnus sous le nom générique « contrôle ».

Après avoir reçu les données transformées, le module de réponse 55 invoque le module 56 de contrôle d'intégrité.

Le module .56 vérifie l'intégrité des données en effectuant notamment des tests de cohérence entre par exemple la longueur du fichier transformé et l'information de l'entête relative à cette longueur.

Les données contrôlées sont alors transmises au module 57 de reconstitution des fichiers.

Le module 57 crée ou complète l'entête iCAP avec les informations sur la nature du serveur iCAP 4. Il modifie les entêtes HTTP de l'ordinateur 1 et/ou du serveur Web 2 en fonction des consignes du module 56 de contrôle d'intégrité ; en cas d'absence d'un ou plusieurs fichiers d'interface en entrée, le module 57 peut les recréer à partir des fichiers d'interface en sortie.

Une fois reconstitué, le fichier est transmis au module de communication 50 qui le retourne au client iCAP 3 ayant initialisé la requête iCAP.

## Revendications

1. Adaptateur (5) de flux de type iCAP en fichiers aptes à être utilisés directement par un serveur (4) ou un dispositif client (3), permettant de formaliser les échanges entre ledit dispositif client et ledit serveur lors d'échanges de flux entre ledit dispositif client (3) disposant d'un fichier Internet et ledit serveur (4) apte à assurer à la demande du dispositif client (3), au moins un service de transformation dudit fichier, ledit adaptateur (5) comprenant des moyens de communication avec le dispositif client (3) et le serveur (4) et un fichier de configuration dans lequel est(sont) déclaré(s) le(s) service(s) de transformation.

2. Adaptateur selon la revendication précédente, **caractérisé en ce qu'**il comporte un module (50) de communication apte à gérer la communication avec le dispositif client (3).

3. Adaptateur selon l'une des revendications précédentes, **caractérisé en ce qu'**il comporte un module (51) d'extraction des entêtes et du contenu du fichier Internet.

4. Adaptateur selon la revendication précédente, **caractérisé en ce qu'**il comporte un module (52) de pré-analyse des entêtes.

5. Adaptateur selon l'une des revendications précédentes, **caractérisé en ce qu'**il comporte au moins un module (53a ou 53b ou 53c ou 53d) de création de fichiers d'interface entre l'adaptateur (5) et le serveur (4).

6. Adaptateur selon l'une des revendications précédentes, **caractérisé en ce qu'**il comporte un module (54) d'appel du service d'adaptation du serveur (4).

7. Adaptateur selon l'une des revendications précédentes, **caractérisé en ce qu'**il comporte un module (55) de réponse.

8. Adaptateur selon l'une des revendications précédentes, **caractérisé en ce qu'**il comporte un module (56) de contrôle d'intégrité du fichier transformé destiné au dispositif client(3).

9. Adaptateur selon l'une des revendications précédentes, **caractérisé en ce qu'**il comporte un module (57) de reconstitution du fichier transformé destiné au dispositif client(3).

10. Système d'échange de flux entre un dispositif client (3) disposant d'un fichier Internet, et un serveur (4) apte à assurer à la demande du dispositif client (3), au moins un service de transformation dudit fichier, la communication entre le dispositif client et le serveur étant basée sur un protocole d'adaptation de contenu de fichiers Internet de type iCAP, **caractérisé en ce qu'**il comporte un adaptateur selon l'une quelconque des revendications 1 à 9.

11. Serveur de type iCAP, apte à assurer à la demande d'un dispositif client (3) disposant d'un fichier Internet, au moins un service de transformation dudit fichier, **caractérisé en ce qu'**il comprend un adaptateur selon l'une quelconque des revendications 1 à 9.

12. Procédé d'échange de flux entre un dispositif client disposant d'un fichier Internet, et un serveur apte à assurer au moins un service de transformation de fichier, la communication entre le dispositif client et le serveur étant basée sur un protocole d'adaptation de contenu de fichiers Internet de type iCAP, **caractérisé en ce qu'**il consiste à placer un adaptateur des flux de type iCAP en fichiers aptes à être utilisés entre le dispositif client et le serveur et **en ce qu'**il comporte les étapes suivantes :
a- l'envoi d'un fichier Internet, par ledit dispositif client à l'adaptateur,
b- l'adaptation du fichier Internet par l'adaptateur, permettant de formaliser les échanges entre ledit dispositif client et ledit serveur et envoi du fichier adapté audit serveur,
c- l'exécution de la transformation du fichier adapté, par ledit serveur et envoi du fichier transformé audit adaptateur,
d- l'adaptation du fichier transformé par l'adaptateur, permettant de formaliser les échanges entre ledit dispositif client et ledit serveur.
e- l'envoi du fichier transformé et adapté audit dispositif client.

13. Procédé selon la revendication précédente, **caractérisé en ce que** l'étape b- consiste pour l'adaptateur à
- extraire les entêtes et éventuellement le contenu du fichier Internet fourni par le dispositif client,
- procéder à une pré-analyse des entêtes,
- générer des fichiers d'interface,
- appeler le service de transformation du serveur,
- se mettre en attente d'une réponse du serveur.

14. Procédé selon l'une des revendications 12 ou 13, **caractérisé en ce que** l'étape d- consiste pour l'adaptateur à
- vérifier le paramètre de retour de l'appel et contrôler l'intégrité du fichier transformé,
- lorsque le contrôle d'intégrité le commande, reconstitution du fichier transformé.

15. Procédé selon l'une des revendications 12 à 14, **caractérisé en ce qu'**il comporte une étape préalable d'initialisation de l'adaptateur consistant à déclarer dans un fichier de configuration de l'adaptateur, le ou les services de transformation.

## Patentansprüche

1. Anpassungsglied (5) des Flusses vom Typ iCAP in geeignete Dateien, um direkt von einem Server (4) oder einer Client-Einrichtung (3) verwendet zu werden, welches erlaubt, den Austausch zwischen der Client-Einrichtung und dem Server bei Datenflussaustausch zwischen der Client-Einrichtung (3) zu formalisieren, umfassend eine Internet-Datei und den geeigneten Server (4), um die Anfrage der Client-Einrichtung (3) zu sichern, mindestens einen Transformations-Dienst der Datei, wobei das Anpassungsglied (5) Kommunikationsmittel mit der Client-Einrichtung (3) und dem Server (4) umfasst und eine Konfigurations-Datei, in welcher der (die) Transformations-Dienst(e) vereinbart ist (sind).

2. Anpassungsglied gemäß dem vorherstehenden Anspruch, **dadurch gekennzeichnet, dass** es ein geeignetes Kommunikations-Modul (50) umfasst, um die Kommunikation mit der Client-Einrichtung (3) zu verwalten.

3. Anpassungsglied nach einem der vorherstehenden Ansprüche, **dadurch gekennzeichnet, dass** es ein Extraktions-Modul (51) der Kopfzeilen und des Inhaltes der Internet-Datei umfasst.

4. Anpassungsglied gemäß dem vorherstehenden Anspruch, **dadurch gekennzeichnet, dass** es ein Voranalyse-Modul (52) der Kopfzeilen umfasst.

5. Anpassungsglied gemäß einem der vorherstehenden Ansprüche, **dadurch gekennzeichnet, dass** es mindestens ein Modul (53a oder 53 b oder 53c oder 53d) zur Bildung der Schnittstellen-Dateien zwischen dem Anpassungsglied (5) und dem Server (4) umfasst.

6. Anpassungsglied gemäß einem der vorherstehenden Ansprüche, **dadurch gekennzeichnet, dass** es ein Aufruf-Modul (54) des Anpassungs-Dienstes des Servers (4) umfasst.

7. Anpassungsglied gemäß einem der vorherstehenden Ansprüche, **dadurch gekennzeichnet, dass** es ein Antwort-Modul (55) umfasst.

8. Anpassungsglied gemäß einem der vorherstehenden Ansprüche, **dadurch gekennzeichnet, dass** es ein Steuer-Modul (56) der Integrität der transformierten Datei umfasst, die für die Client-Einrichtung (3) bestimmt ist.

9. Anpassungsglied gemäß einem der vorherstehenden Ansprüche, **dadurch gekennzeichnet, dass** es ein Wiederherstellungs-Modul (57) der transformierten Datei umfasst, die für die Client-Einrichtung (3) bestimmt ist.

10. Datenflussaustausch-System zwischen einer Client-Einrichtung (3) und einem geeigneten Server (4), umfassend eine Internet-Datei, um die Anfrage der Client-Einrichtung (3) zu sichern, mindestens einen Transformations-Dienst der Datei, wobei die Kommunikation zwischen der Client-Einrichtung und dem Server auf einem Anpassungs-Protokoll des Inhalts der Internet-Dateien vom Typ iCAP beruht, **dadurch gekennzeichnet, dass** es ein Anpassungsglied nach irgendeinem der Ansprüche 1 bis 9 umfasst.

11. Server vom Typ iCAP, der geeignet ist, um die Anfrage einer Client-Einrichtung (3) zu sichern, umfassend eine Internet-Datei, mindestens einen Transformations-Dienst der Datei, **dadurch gekennzeichnet, dass** er ein Anpassungsglied nach irgendeinem der Ansprüche 1 bis 9 umfasst.

12. Datenflussaustausch-Verfahren zwischen einer Client-Einrichtung, umfassend eine Internet-Datei und einen geeigneten Server, um mindestens einen Transformations-Dienst der Datei zu sichern, wobei die Kommunikation zwischen der Client-Einrichtung und dem Server auf einem Anpassungs-Protokoll des Inhalts der Internet-Datei vom Typ iCAP beruht, **dadurch gekennzeichnet, dass** es daraus besteht, ein Anpassungsglied von Flüssen des Typs iCAP in geeignete Dateien zu platzieren, um zwischen der Client-Einrichtung und dem Server verwendet zu werden, und wobei es die folgenden Schritte umfasst:
a- Senden einer Internet-Datei durch die Client-Einrichtung zu dem Anpassungsglied,
b- Anpassung der Internet-Datei durch das Anpassungsglied, welches erlaubt, den Austausch zwischen der Client-Einrichtung und dem Server zu formalisieren und die angepasste Datei an den Server zu senden,
c- Ausführen der Transformation der angepassten Datei durch den Server und Senden der transformierten Datei zu dem Anpassungsglied,
d- Anpassung der transformierten Datei durch das Anpassungsglied, welches erlaubt, den Austausch zwischen der Client-Einrichtung und dem Server zu formalisieren.
e- Senden der transformierten und angepassten Datei zu der Client-Einrichtung.

13. Verfahren gemäß dem vorherstehenden Anspruch, **dadurch gekennzeichnet, dass** der Schritt b- für das Anpassungsglied darin besteht, um
- die Kopfzeilen und eventuell den Inhalt, der von der Client-Einrichtung bereitgestellten Internet-Datei, zu extrahieren,
- auf eine Voranalyse der Kopfzeilen vorzugehen,
- Schnittstellen-Dateien zu bilden,
- den Transformations-Dienst des Servers aufzurufen,
- auf eine Antwort des Servers zu warten.

14. Verfahren gemäß einem der Ansprüche 12 oder 13, **dadurch gekennzeichnet, dass** der Schritt d- für das Anpassungsglied darin besteht, um
- den Rückkehr-Parameter des Aufrufs zu bestätigen und die Integrität der transformierten Datei zu prüfen,
- bei der Integritätsprüfung des Befehls, die transformierte Datei wiederherzustellen.

15. Verfahren gemäß einem der Ansprüche 12 bis 14, **dadurch gekennzeichnet, dass** es einen Schritt vor der Initialisierung des Anpassungsglieds umfasst, der darin besteht, in einer Konfigurationsdatei des Anpassungsglieds, den oder die Transformations-Dienst(e) zu vereinbaren.

## Claims

1. An adapter (5) for adapting type iCAP data flows to files adapted to be used directly by a server (4) or a client device (3), enabling the exchanges between the said client device and the said server to be formalised during data flow exchanges between the said client device (3) having an Internet file and the said server (4) adapted to ensure, on request from the client device (3), at least one conversion service for the said file, the said adapter (5) comprising means of communication with the client device (3) and the server (4) and a configuration file in which the conversion service or services is/are declared.

2. An adapter according to claim 1, **characterised in that** it comprises a communication module (50) adapted to manage the communication with the client device (3).

3. An adapter according to claim 1 or 2, **characterised in that** it comprises a module (51) for extracting the headings and content of the Internet file.

4. An adapter according to the preceding claim, **characterised in that** it comprises a heading pre-analysis module (52).

5. An adapter according to any one of the preceding claims, **characterised in that** it comprises at least one module (53a or 53b or 53c or 53d) for creating interface files between the adapter (5) and the server (4).

6. An adapter according to any one of the preceding claims, **characterised in that** it comprises a module (54) for calling up the adaptation service from the server (4).

7. An adapter according to any one of the preceding claims, **characterised in that** it comprises an answer module (55).

8. An adapter according to any one of the preceding claims, **characterised in that** it comprises a module (56) for checking the integrity of the converted file intended for the client device (3).

9. An adapter according to any one of the preceding claims, **characterised in that** it comprises a module (57) for reconstituting the converted file intended for the client device (3).

10. A system for the exchange of data flows between a client device (3) having an Internet file and a server (4) adapted to ensure, on request from the client device (3), at least one conversion service for the said file, the communication between the client device and the server being based on an Internet file content adaptation protocol of the iCAP type, **characterised in that** it comprises an adapter according to any one of claims 1 to 9.

11. A server of the iCAP type adapted to ensure, on request from a client device (3) having an Internet file, at least one conversion service for said file, **characterised in that** it comprises an adapter according to any one of claims 1 to 9.

12. A method of exchanging data flows between a client device having an Internet file and a server adapted to ensure at least one file conversion service, the communication between the client device and the server being based on an Internet file content adaptation protocol of the iCAP type, **characterised in that** it comprises placing an adapter for adapting data flows of the iCAP type to files adapted to be used between the client device and the server and **in that** it comprises the following steps:
a- sending an Internet file by the said client device to the adapter,
b- adaptation of the Internet file by the adapter, allowing formalisation of the exchanges between the said client device and the said server and sending the adapted file to the said server,
c- execution of the adapted file conversion by said server and sending of the converted file to the said adapter.
d- adaptation of the converted file by the adapter allowing formalisation of the exchanges between the said client device and the said server.
e- sending the converted and adapted file to the said client device.

13. A method according to the preceding claim, **characterised in that** the step b- consists, for the adapter, in
- extracting the headings and possibly the content of the Internet file provided by the client device,
- proceeding to pre-analysis of the headings,
- generating interface files,
- calling up the conversion service from the server,
- going to standby for an answer from the server.

14. A method according to claim 12 or 13, **characterised in that** the step d- consists, for the adapter, in
- verifying the parameter for return of the call and checking the integrity of the converted file,
- when the integrity check so commands, reconstitution of the converted file.

15. A method according to any one of claims 12 to 14, **characterised in that** it comprises a prior adapter initialisation step consisting in declaring the conversion service or services in a configuration file of the adapter.
